# EUROPEAN PATENT APPLICATION

(11) **EP 4 585 330 A2**
(43) Date of publication of application: **16.07.2025**
(21) Application number: 25167765.4
(22) Date of filing: 13.08.2021
(51) Int. Cl.: B22F 10/38

(54) **DRYING DURING ADDITIVE AND SUBTRACTIVE MANUFACTURING**

(30) Priority: 14.08.2020 US 202063065950 P
(62) Divisional of application: 21856781.6
(71) Applicant: Mantle Inc., San Francisco, CA 94103 (US)
(72) Inventor: CONNOR, Stephen T., San Francisco, 94103 (US); MCKAY, Matthew, San Francisco, 94103 (US)
(74) Representative: J A Kemp LLP

(57) **Abstract**

Transformation steps including drying are incorporated into a process of additive manufacturing of a part. Processes and devices for achieving a transformation are described. A cycle of manufacturing is begun by adding a feedstock such as a metal paste to form a partial part followed by a transformation of the added feedstock, such as removing solvent from a metal paste, to form a transformed part suitable for a manipulation step such as machining. Inclusion of a manipulation process such as machining comprises a single cycle of a manufacturing process. One or more said cycles comprise the process of producing a completed part suitable for further processing such as sintering in the case of a metal paste feedstock to form a finished part.

## Description

### CROSS-REFERENCE TO RELATED APPLICATIONS

This application claims the benefit of U.S. Provisional Application No. 63/065,950 filed on August 14, 2020, the entire disclosure of which is incorporated by reference herein.

### FIELD OF THE INVENTION

The present invention relates to manufacturing intricate parts made of metals and other materials.

### BACKGROUND

Subtractive machining removes material from a billet to create parts with tight tolerances, minimal residual strain, and smooth surfaces but with limitations on the level of intricacy of single parts. For example, subtractive manufacturing by machining cannot create parts with internal structures inaccessible to the subtractive machine element such as cooling channels or hollow, closed-web cores. Additive manufacturing, whereby parts are built by addition of a feedstock such as a sinterable powder paste or filament of materials such as metals, polymers, ceramics, and composites, or laser sintering or binder printing in feedstock powder beds, allows manufacture of parts with intricate internal shapes but lacking some or all of; (1) tight tolerances due to shrinking and warping during external solvent removal and binder washing, (2) minimal residual strain caused by temperature gradients built up during in-situ additive sintering, and (3) smooth surfaces due to the finite spatial size of the discrete additive steps. Additive manufacturing provides other advantages such as quick prototyping and reduced material waste. However, the disadvantages of additive manufacturing often result in requirements for post processing such as annealing and machining.

The value of combining aspects of additive manufacturing and subtractive machining into a hybrid process and platform has been recognized. For example, DMG MORI offers a laser sintered metal powder jet apparatus hybridized with a 5-axis milling apparatus on a single platform which allows alternating additive and subtractive steps without de-chucking the work part. This hybrid solution provides smooth finished surfaces, however high temperatures from the sintering may result in high residual stress and warping in the finished part.

The disclosed embodiments provide a method to manufacture additively, with all the advantages of additive manufacturing, and by subtractive manufacturing, with its known advantages, but additionally without any of the above highlighted disadvantages of additive manufacturing.
21

### SUMMARY OF THE INVENTION

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

A method of forming a completed physical part is disclosed. The method of forming a physical part includes additively manufacturing a part via a first process, transforming the part via a second process including a transformation process to produce a transformed part, manipulating the transformed part via a third process to produce a manipulated part, and repeating at least one of the additively manufacturing, transforming, or manipulating steps to form the completed physical part.

The method of forming a physical part may include where the first process further includes deposition, printing, jetting, or a combination thereof. The first process may include extrusion, placing, or a combination thereof. The second process further may include heating a portion of the part. The second process may include removing, subliming, evaporating, drying, baking, or a combination thereof. The second process may also include exposing the part to a vacuum, a heat source, or a combination thereof. The second process may also include radiative heating, convective heating, partial pressure evaporation, and conductive heating. The second process may include inductive heating. The third process may include removing a portion of the transformed part. The third process may include milling, cutting, ablating, grinding, or a combination thereof. The method of forming a physical part may include forwarding the completed physical part to a secondary operation to form a finished part. A finished physical part, formed by the method is also disclosed.

A method of controlling a transformation process is also disclosed. The method of controlling a transformation process also includes evaluating a first part to produce a first measurement result, comparing the first measurement result to one or more known criteria, and adjusting a parameter of the transformation process based on a comparison between the first measurement result and the one or more known criteria.

Implementations of the method of controlling a transformation process may include where the first measurement result includes several measurements over a period of time. Evaluating a first part may further include evaluating one or more discrete portions of the first part. The first measurement result may be a comparison of one or more measurements taken from the one or more discrete portions of the first part. Evaluating a first part to produce a first measurement result and evaluating a second part to produce a second measurement result may be completed at substantially the same time. The method of controlling a transformation process may include evaluating the second part with a different measurement than evaluating the first part and may include physically contacting the second part. The method of controlling a transformation process may include evaluating a second part to produce a second measurement result. Evaluating a first part further may include measuring a concentration of one or more components of a build material. The one or more components of the build material may include a vapor or a solvent. Evaluating a first part may include physically contacting the first part. Evaluating the part further may include receiving a signal from a sensing system. The sensing system may include a visible camera, a thermal camera, or a combination thereof. The sensing system may include a discrete sensor. The camera system may be capable of operating in the infrared spectrum and in the visible spectrum. The one or more known criteria may be based on a computer assisted design (CAD) model of the first part. The method of controlling a transformation process may include where the known criteria are based on a geometry of the first part. The geometry of the first part may be based on a computer assisted design (CAD) model of the part. The one or more known criteria is based on the measurement result from the sensing system, and the measurement result may be one or more discrete temperatures or a temperature map of the first part. The one or more known criteria may be based on a calibration of the transformation process. Adjusting a parameter of the transformation process may include adjusting a temperature of a part. Adjusting a parameter of the transformation process may include adjusting a radiation source, a gas port, a build surface, or a combination thereof. The method of controlling a transformation process may include stopping the transformation process based on a comparison between the measurement result and the one or more known criteria. The method of controlling a transformation process may include maintaining a bottom portion of the first part at a first temperature and maintaining a top portion of the first part at a second temperature. The first temperature may be lower than the second temperature. The second temperature is from about 0°C to about 300°C. The first temperature is from about 0°C to about 150°C. The method of controlling a transformation process may include irradiating a first portion of the first part, exposing a first portion of the first part to a heated gas, or a combination thereof prior to evaluating the first part to produce a first measurement result.

A method of forming a completed physical part is disclosed. The method of forming a physical part may include additively manufacturing a part via a first process, transforming the part via a second process may include a transformation process to produce a transformed part, controlling the transformation process, may include evaluating a part to produce a measurement result, comparing the measurement result to one or more known criteria, and adjusting a parameter of the transformation process based on a comparison between the measurement result and the one or more known criteria. The method of forming a physical part may include manipulating the transformed part via a third process to produce a manipulated part, and repeating at least one of the additively manufacturing, transforming, or manipulating steps to form the completed physical part. A finished physical part, formed by the method is also disclosed.

### BRIEF DESCRIPTION OF THE DRAWINGS

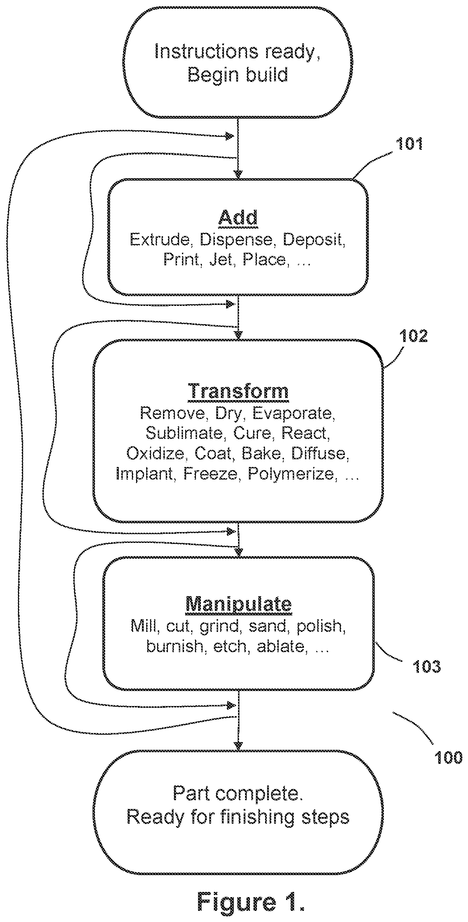

Figure 1 depicts a method including steps of a single cycle of a multiple cycle manufacturing process according to the disclosed embodiments.
Figure 2 schematically depicts a method to transform a partial part by drying during build including convection, partial pressure evaporation, radiation, and conduction according to the disclosed embodiments.
Figure 3 depicts optional drying ports configured to purge or exhaust according to the disclosed embodiments.
Figure 4 depicts a method to create and control drying zones according to the disclosed embodiments.
Figure 5 depicts a configuration of gas ports for establishing flow zones adjacent to the part according to the disclosed embodiments.
Figure 6 depicts a method to control the transformative step of drying according to the disclosed embodiments.
Figure 7 depicts a digital software computer algorithm for control of the transformation step of drying according to the disclosed embodiments.

### DETAILED DESCRIPTION

A person of skill in the relevant art will recognize the terms paste, multi-component feedstock, feedstock, metal paste, metal powder paste, material carrier, build material, binderless paste, and working material used in this disclosure and in disclosures contained herein by reference may be used from time to time to refer to the same item or of similar items of the same class. Further, a person of skill in the relevant art will recognize the terms support material paste, multi-component feedstock, feedstock, inert support paste, support material, (materials for) support used in this disclosure and in disclosures contained herein by reference may be used from time to time to refer to the same items or similar items of the same class. Further, a person of skill in the relevant art will recognize the terms build plate, build surface, and substrate used in this disclosure and in disclosures contained herein by reference may be used from time to time to refer to the same items or similar items of the same class. Further, a person of skill in the relevant art will recognize the terms dispensing paste, depositing paste, material deposition, adding, and addition to include extruding, dispensing depositing, printing, jetting, and placing used in this disclosure and in disclosures contained herein by reference may be used from time to time to refer to the same items or similar items of the same class. Further, a person of skill in the relevant art will recognize the terms drying paste, additive removal, and transformation or transforming to include drying, evaporating, and removing used in this disclosure and in disclosures contained herein by reference may be used from time to time to refer to the same items or similar items of the same class. Further, a person of skill in the relevant art will recognize the terms green body, dried film, dried paste, part precursor, part, partial part, physical part, completed part, completed physical part, completed part suitable for further processing, top portion, bottom portion, and manipulated bottom portion used in this disclosure and in disclosures contained herein by reference may be used from time to time to refer to the same items or similar items of the same class. Further, a person of skill in the relevant art will recognize the terms sintered body, part, physical part, sintered workpiece, finished part, and finished physical part used in this disclosure and in disclosures contained herein by reference may be used from time to time to refer to the same items or similar items of the same class. Further, a person of skill in the relevant art will recognize the terms binder, solvent, additive, component, other fluidizing agent, and vehicle used in this disclosure and in disclosures contained herein by reference may be used from time to time to refer to the same items or similar items of the same class. Further, a person of skill in the relevant art will recognize the terms dispensing tool, and deposition mechanism used in this disclosure and in disclosures contained herein by reference may be used from time to time to refer to the same items or similar items of the same class. Further, a person of skill in the relevant art will recognize the terms heating tool, and additive removal mechanism used in this disclosure and in disclosures contained herein by reference may be used from time to time to refer to the same items or similar items of the same class. Further, a person of skill in the relevant art will recognize the terms machining tool and material manipulation mechanism used in this disclosure and in disclosures contained herein by reference may be used from time to time to refer to the same items or similar items of the same class. Further, a person of skill in the relevant art will recognize the terms machining and manipulation to include mill, cut, grind, sand, polish, burnish, etch, and ablate used in this disclosure and in disclosures contained herein by reference may be used from time to time to refer to the same items or similar items of the same class. Further, a person of skill in the relevant art will recognize the terms furnace, sintering tool, and sintering mechanism used in this disclosure and in disclosures contained herein by reference may be used from time to time to refer to the same items or similar items of the same class. Further, a person of skill in the relevant art will recognize the terms computer assisted design model, CAD model, virtual part model, and build model used in this disclosure and in disclosures contained herein by reference may be used from time to time to refer to the same items or similar items of the same class.

A manufacturing process to form a physical part and a method to achieve said manufacturing process is disclosed. The manufacturing process to form a physical part is accomplished by repeatedly applying a cycle 100 of the steps of addition 101 of a material to a part, transforming 102 material recently added to the part so that it assumes a form amenable to a manipulation process, and a manipulation step 103. Addition may be by deposition, dispensing, extrusion, printing, jetting or placing but also by other physical and chemical processes. Transforming the added material is primarily accomplished by removal of a component of the added material principally by evaporation (e.g. drying) but also other physical or chemical processes such as sublimation, curing, reacting, oxidizing, coating, baking, diffusing, implanting, freezing, or polymerizing, or combinations thereof. Manipulation is primarily by subtraction where added material may be physically removed preferably by a milling process and primarily by a cutting process although other physical, chemical, or energetic processes such as grinding, sanding, polishing, burnishing, etching, and ablating which do not necessarily remove substantial net material may also be advantageous. Each application of a single cycle may include one, two, or all three of the above three outlined steps. These cycles are repeated once or many times, such that it is sufficient to completely form a part, referred herein as a completed part. The completed part will typically be forwarded on to other secondary processes such as de-binding, secondary rework operations (e.g. grinding, milling) and sintering to form a finished part.

The additive step 101 can be achieved by including dispensing or depositing or extruding or jetting or printing or placing a multi-component feedstock comprising primary materials such as metals and metal alloys, polymers, composites, and ceramics included as intended to be the primary constituents of the finished part and any related inert support structures and secondary materials such as solvents, binders, components to improve flow properties, components to improve the adding step 101, the transformative step 102, the manipulative step 103, or any post-processing steps after completion of the last manipulative step 103, components to improve shelf stability of the multi-component feed stock and components to impart other desirable properties to the multi-component feedstock. Both primary and secondary materials may include, but are not limited to, metals, metal alloys, oxides, sulfides, nitrides, pnictides, polymers and various ceramics. Examples of metals include, but are not limited to, titanium, zirconium, hafnium, vanadium, niobium, tantalum, chromium, molybdenum, tungsten, manganese, magnesium, iron, cobalt, nickel, copper, zinc, boron, aluminum, carbon, silicon, tin, phosphorus and mixtures, alloys or composites thereof. Examples of metal alloys include, but are not limited to, carbon steels, stainless steels, and tool steels. Examples of oxides, sulfides, nitrides, pnictides and ceramics include, but are not limited to, aluminum oxide, aluminum nitride, silicon nitride, silicon oxide, aluminum silicon oxides, cerium oxides, boron nitride, silicon carbide, titanium nitride, titanium carbide, titanium oxide, zinc oxide, zinc sulfide, zirconium oxide, yttrium stabilized zirconium oxide, hafnium oxide, tungsten oxide, tungsten carbide, carbon fiber, and graphite. Examples of polymers include, but are not limited to, polyetherimide, polyamideimide, polyethersulfone, polyphenylsulfone, polyetherketone and polyetheretherketone, polylactic acid, polyvinyl pyrrolidinone, polyacrylic acid, ethyl cellulose, methyl cellulose, hydroxypropyl cellulose, hydroxypropyl methyl cellulose, and liquid crystal polymers. The specific physical form taken by the multi-component feedstock prior to the additive step may include pastes, filaments, inks, ingots, boules, pellets, granules, slurries, gels, suspensions, aggregates, and others.

The multi-component feedstock form may be a metal paste comprising metal particles, one or more solvents or other fluidizing agents, binders, and additives which act as a vehicle for the metal particles through modifying the flow properties of the metal paste, and the properties affecting solidification and densification during drying, i.e. evaporating or otherwise removing solvents and other secondary components during a transformative step 102, as well as other important factors such as shelf stability. Other multi-component feedstocks that include a solvent which, advantageously, can be removed by said drying process, such as ceramic pastes and otherwise inert support pastes used for support structures may also be added. The additive step may also be accomplished with filament form feedstocks which may be designed to be dried or transformed in another way, or in any other suitable form comprised of a desired primary material and secondary materials. Examples of solvents include, but are not limited to, water , ethylene glycol, diethylene glycol, diethylene glycol monobutyl ether, triethylene glycol monobutyl ether, methanol, ethanol, propanol, butanol, pentanol, hexanol, heptanol, octanol, terpineol, texanol butyl ester, mineral spirits, propylene carbonate, pentane, hexane, cyclohexane, heptane, octane, nonane, decane, undecane, dodecane, tridecane, tetradecane, toluene, benzene, xylene, mesitylene, tetrahydrofuran, ethanolamine and N - methylpyrrolidone, dichloromethane, ketones, dimethylacetamide, acetone, methyl ethyl ketone, cyclohexanone, methyl acetate, and n-butyl acetate. Examples of additives and binders includes, but are not limited to, poly (ethylene oxide), ethyl cellulose, methyl cellulose, hydroxypropyl cellulose, hydroxyethyl cellulose, nitrocellulose, polymethylmethacrylate, polystyrene, polyester, methyl acrylate, ethylacrylate, butylacrylate, acrylonitrile copolymer, maleic acid, and maleic acid ester, polyvinyl acetate, polyethylene, polypropylene, polyvinylbutyral, poly (carbonate), poly (acrylic acid), rosin, modified rosin, terpene resin, phenolic resin, paraffin wax, ethylene vinyl alcohol, polycaprolactam, and combinations thereof.

The physical processes used for manipulative step 103 such as cutting, grinding, sanding, polishing, and burnishing, place certain requirements on the part under construction. Desirable milling processes capable of creating accurate, smooth, and stable surfaces require that the material of the part be substantially workable. Such processes applied to surfaces insufficiently solid or dry or likely to distort or fracture during and after mechanical working result in inferior finished surfaces and lower final tolerances and thus further necessitate intermediate transformative steps 102.

Transformation 102 such as drying a metal powder paste makes the part amenable to the manipulation step by satisfying the essential requirements of solidification and densification. Drying a metal powder paste can be achieved by subjecting the metal paste to a combination of one or more of convection heating, radiation heating, conduction heating, partial pressure evaporation, and partial vacuum. Unique combinations of two or more of these exhibit advantageous drying properties not present in the application of only one such process. For example, convection heating may be configured with a partial vacuum to speed evaporation and then collect and exhaust solvent as well as control machine chamber temperature, or radiation heating may be configured with convection heating for fast evaporation and control of high temperatures, or conduction heating from the build surface 210 may be configured with radiative heating to control the temperature gradient between the build surface and the volume of newly added materials. Build surface 210 may be many types of surfaces including a substrate, a build plate, or an existing part. When drying a metal paste, the temperature of the dried portion of the part may be maintained between 0°C and 200°C, more advantageously between 0°C and 150°C, and even more advantageously between 0°C and 100°C. For another composition of a metal paste, the temperature of the dried portion of the part may be maintained between 0°C and 80°C, or 40°C and 100°C, or 40°C and 80°C dependent on exact composition. The newly added metal paste temperature may be maintained from about 0°C to about 350°C, or more or from about 0°C to about 300°C, or from about 0°C to about 250°C, depending on composition, in order to improve the dispense characteristics, expedite volatilization of the targeted species of the multi-component feedstock, and facilitate creation of a uniformly dense part once fully formed. It will be understood that it may be advantageous to maintain the newly added metal paste at a higher temperature than the dried portion of the part. It will be also understood that the most advantageous drying temperatures will depend on the properties of the component solvents, the metals, and other additives in the paste, other concurrent drying applied such as convection, the part geometry and its thermal properties such as specific heat, the optimal desired drying rate and drying endpoint as well as many other process parameters that would be apparent to those skilled in the art.

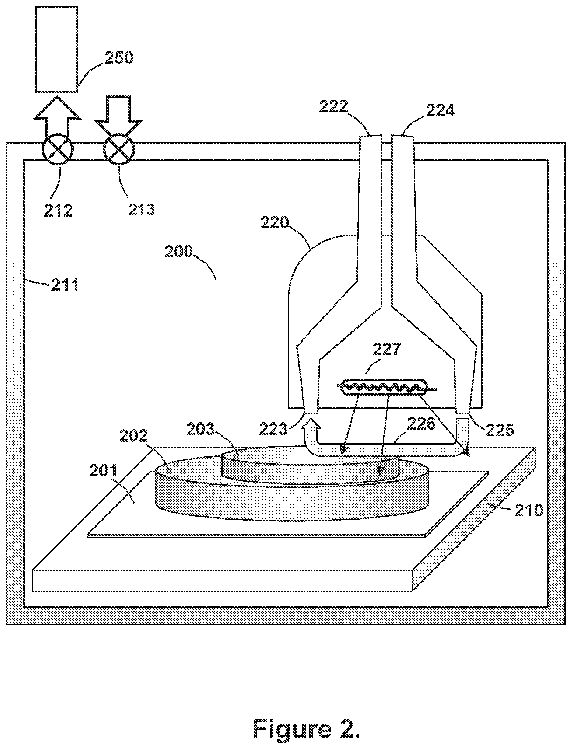

In an embodiment, shown in Figure 2, a part comprising a support structure 201, a bottom portion 202 of the to be completed part, in an embodiment made of already dried and machined metal paste, and a top portion 203 having been added and in the process of drying and not yet manipulated preferably by machining, rests upon and is fixed to a heated and temperature controlled build surface 210. Temperature control of the build surface allows controlled heating, and thereby thermally driven drying, of the top portion by conduction heating through the partially completed part. The build surface may be thermally insulated from machine chamber 211. The machine chamber is temperature controlled in order to assist in temperature control of the atmosphere 200 inside the machine chamber. The machine chamber is substantially sealed to prevent exfiltration to the ambient atmosphere and preferably achieve negative pressure with respect to the ambient atmosphere or a vacuum as low as 0.5 atm, 0.1 atm, 0.01 atm, or 0.001 atm. The composition and pressure of the chamber atmosphere may be changed through outlet and inlet ports 212 and 213, respectively. Venting or evacuation of the machine chamber along with purging the machine chamber with an atmosphere low in the volatile solvent or solvents being removed from the part will increase part drying through partial pressure evaporation. The drying carriage 220 moves rectilinearly or in raster fashion relative to the build surface or the build surface moves relatively to the drying carriage or both drying carriage and build surface move to achieve relative motion between the two. The drying carriage affects the drying of the top portion as follows: Heated clean dry air or other inert gases are provided into port 224 and exit from port 225 near the part. Examples of inert gases include, but are not limited to, nitrogen and argon. The now solvent laden flow then may substantially exit through port 223 and be carried away from the chamber through port 222. This pair of ports generates a transverse flow 226 along the periphery of the top portion of the part thereby providing both convective heating and partial pressure evaporation through removal of volatilized solvent in the atmosphere immediately adjacent the part in order to dry the top portion. In this embodiment, a single pair of ports 222 and 224 and concomitant ports 223 and 225 near the work part, a double pair of ports, or three or more such pairs of ports may be attached to the drying carriage in order to provide heated clean dry air or other inert gases thereby zones of flow immediately adjacent to top portion and facilitating uniform and controlled drying of the part. A suitable abatement system may be employed downstream on the exhausted gases as required by the nature of the removed solvent waste. Due to the potentially relative motion of the drying carriage and the machine chamber, ports 222 and 224 may be coupled flexibly through the machine chamber. Alternately, exit and entrance ports may reverse roles according to the direction of relative movement between the drying carriage and the build surface. Additional heating of the top portion is provided by radiation source 227. The radiation source within the drying carriage may be one of several suitable sources including, but not limited to, , an infrared filament lamp providing substantially blackbody radiation with peak intensity at about a 1µm spectral wavelength, an infrared light emitting diode (LED), a LED lensed array which would allow detailed control of the heating spatial footprint upon the build surface area containing the part, a high intensity arc lamp which can provide blackbody radiative energy with spectral intensity peaking at wavelengths <0.5µm, and a Globar which can provide blackbody radiative energy at a longer spectral wavelength peeking from about 4µm to about 15µm.

In a similar embodiment, the build surface 210 is capable of generating an electromagnetic field that induces the heating of the bottom portion of the part 202, the top portion of the part 203, or combination thereof. The induction heating advantageously causes the evaporation of the volatile components of the build material. The ones with ordinary skills in the art immediately recognize that only conductive materials can be heated via induction. In this embodiment, the primary components of the part are particles of the metals described herein. Examples of the metals include, but are not limited to, titanium, zirconium, hafnium, vanadium, niobium, tantalum, chromium, molybdenum, tungsten, manganese, magnesium, iron, cobalt, nickel, copper, zinc, boron, aluminum, carbon, silicon, tin, and mixtures, alloys or composites thereof. Examples of metal alloys include, but are not limited to, carbon steels, stainless steels, and tool steels. In this specific embodiment, the inductively heated metal particles transfer part of the heat by thermal conduction to the rest of the build material, including the volatile component.

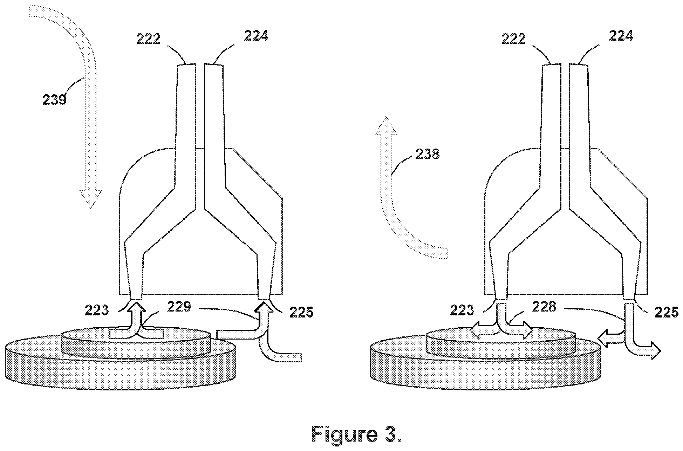

In another embodiment, shown in Figure 3, ports 222 and 224 are both configured to either convey heated clean dry air or other gases, including inert gases, into the machine chamber or exhaust solvent laden atmosphere from the machine chamber. In the embodiment shown in Figure 3, ports 223 and 225 both provide heated clean dry air or other gases to the part and build surface area as the drying carriage moves relative to the build surface. This provides flows 228 which impinge directly on the work part and build surface area including the top portion thereby facilitating drying of the part by convection heating and partial pressure evaporation. In this embodiment, outlet port 212 must vent 238 excess pressure inside the machine chamber in order to keep the partial pressure of the solvent in a desired range. In this embodiment, only one of ports 222 and 224, both of them, or three or more such ports may be attached to the drying carriage with a concomitant group of ports such as ports 223 and 225 near the part in order to provide heated clean dry air or other gases thereby facilitating drying of the part. Inversely, as also shown in Figure 3, ports 223 and 225 both are configured to exhaust solvent laden atmosphere from the machine chamber providing exhaust flows 229 immediately adjacent to the part and build surface area while fresh purge gases may be supplied 239 through inlet port 213. One, two, or more ports may all be configured for exhaust.

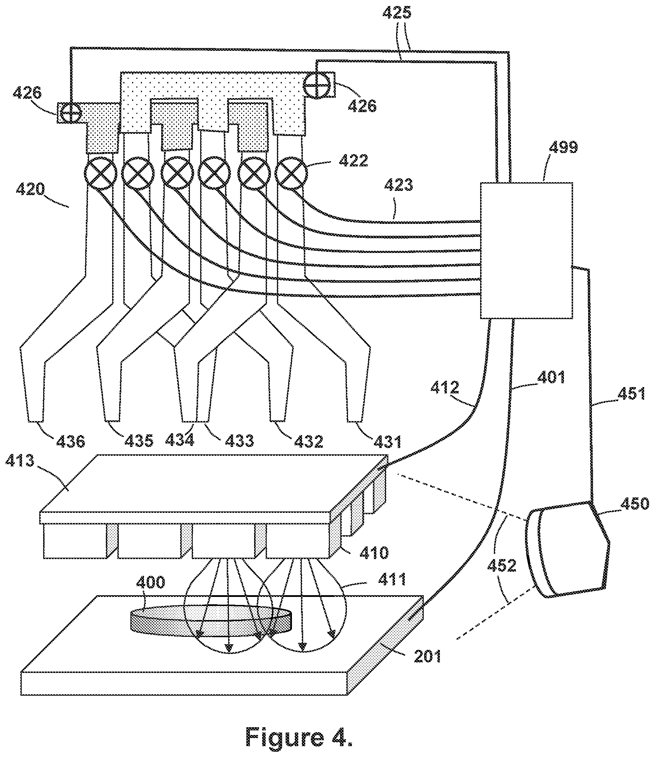

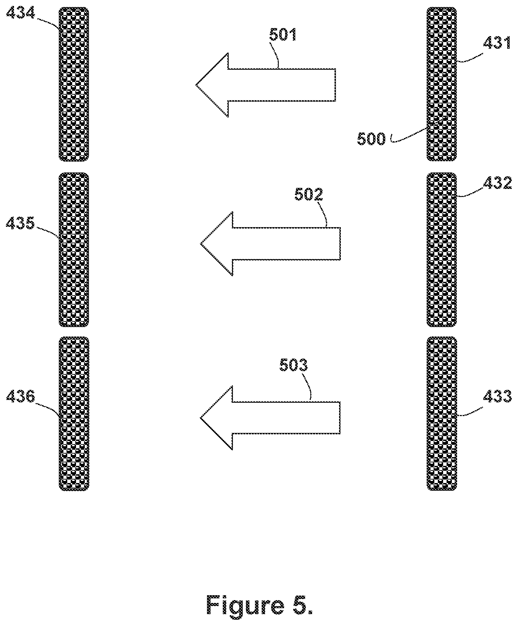

In another embodiment, depicted in Figure 4, radiative heating, convective heating, partial pressure evaporation, and conductive heating are combined to create spatial and temporal control over the drying process. Part 400 is undergoing manufacture while attached to build surface 210. Radiation source array 413 comprising an assemblage of radiation sources 410 such as an array of infrared LEDs or filament lamps having a radiation distribution 411 is arranged such that each individual radiation source in the array substantially impinges only a portion of the build surface area with diminished radiation density overlap between adjacent sources. The individual radiation sources may be equipped with a lens and other optical devices such as stops and baffles to ensure a particular radiation distribution and they may also be intrinsically directional in their radiation distribution so that each individual source creates an individually controllable radiation heated zone at the plane of the build surface. The radiation source array is controlled by controller 499 via connection 412 whereby the intensity of each individual radiation source in the array may be adjusted depending on where the drying carriage is in relation to the part, which step of the manufacturing cycle (e.g. drying vs. adding vs. subtracting) the part is undergoing, and other ambient conditions such as the temperature of the part, build surface, or other components of the machine whose temperature may affect drying. This control ability may be used to compensate for regional cooling in areas such as edges and corners of the part and build surface and areas experiencing faster radiative loss due to proximity to cool spots in the machine chamber. It could also be used to compensate higher or lower radiation absorption at the part as a result of certain geometries or surfaces. Such surfaces could be predetermined through generation of the layer deposition instructions and layer manipulation instructions from the virtual part model of the physical part, or they may be ascertained in real time via a sensing system 450 connected to the controller via connection 451. In a preferred embodiment, the sensing system is a camera system, one or more discrete sensing systems, or a combination thereof. The discrete sensing system is capable of evaluating discrete portions of the part. An example of a discrete sensing system is a pyrometer that can measure the temperature of one or more discrete portions of the part. An example of such pyrometer is the miniature IR sensor of the OS130A-Series from Omega (Norwalk, CT). The camera system can operate in the infrared spectrum at wavelengths from about 7µm to about 15µm, in the visible spectrum at wavelengths from about 900nm to about 400nm and be able to correlate temperature anomalies accurately with physical points in the build structure area and immediate vicinity via its advantageous field of view 452. The camera system can determine the temperature map of a part collected in the infrared spectrum and superimpose it to the picture of the part collected in the visible spectrum. The camera system may comprise one camera comprising a single image sensor (e.g. a CMOS or microbolometer array) and one lens system (e.g. a commercial 35mm C-mount lens) capable of one or more spectral ranges or more than one camera capable of one or more spectral ranges. An example of such a camera system incorporates a microbolometer array and is available from FLIR Systems Inc. (Wilsonville, OR). Informed by predictions from the virtual part model (CAD model) of the physical part and layer instructions and real time images from the camera system, the controller may make adjustments to the radiation source array 413, the gas port array 420, the build surface, 201, and any other correlated process parameters in order to optimize the build process, and specifically the drying process. The controller further allows anticipation and adjustment for future heating requirements such as preheating the part, or adjusting its temperature, before beginning to add more material. Such temperature adjustment may be achieved by controlling the temperature and flow of the gas coming from the gas port array. The build surface temperature may be further controlled from the controller via connection 401 in order to provide a bias temperature to the part. Further, gas port array 420 comprises a pair of manifolds with selector valves 426 which may be used to either inject heated clean dry air or other inert gases or exhaust solvent laden gases from the drying process while under control of the controller via connections 425 and through ports such as port 431 using valve and actuator 422 controlled by the controller via connection 423. The array of ports 431, 432, 433, 434, 435, 436 may be arranged linearly in pairs transverse to, or in-line with, the rectilinear relative motion of the drying carriage to provide definable zones 501, 502, and 503 of convection heating and partial pressure evaporation as shown in Figure 5. The ports may be equipped with diffusers or baffles 500 to improve the flow characteristics out of and into the ports. As drawn, pair of ports 431 and 434 form zone 501, pair of ports 432 and 435 form zone 502, and pair of ports 433 and 436 form zone 503 thus establishing a middle zone and two edge zones in order to allow for adjustments in air flow to achieve uniform drying. Many other zone arrangements are possible.

In another embodiment, the sensing system is capable of measuring the spectrum of light emitted or reflected by one or more portions of the part. In this embodiment, the sensing system is preferably a spectrometer, for example a IR spectrometer, Raman spectrometer, UV-VIS spectrometer, etc. The light source may be monochromatic or polychromatic and it may be a laser, multiple lasers, LEDs, filtered lamp, unfiltered lamp, etc. In this embodiment, the sensing system is used to measure the presence or concentration of molecules, compounds or components in the part, preferably in the top portion of the part.

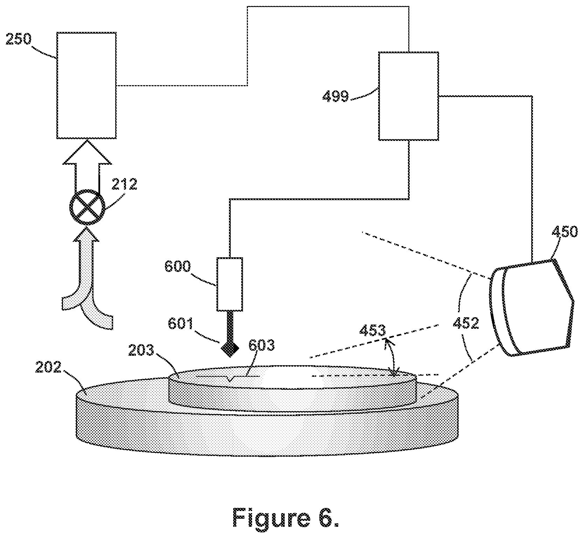

In a further embodiment, the transformative process may be monitored by way of a physical test prior to the manipulation step as depicted in Figure 6. The physical test may be used as a "go or no-go" style test to determine whether the added material has been suitably transformed for the manipulation step to begin. When the physical test shows incomplete transformation, additional transformation, such as drying, may be performed followed by more testing and processing. Alternatively, metrics from one or more physical test or tests along with other process parameters, measured or set, may be used to predict, by model or calibration, the additional needed transformative processing required before moving to the manipulation step. In Figure 6, actuator 600 actuates probe 601 under control of controller 499. The probe may be an indentation probe or it may be a scratch probe or any suitable probe designed to create a mark 603 such as an indentation or scratch which would be indicative of the degree of transformation. The probe creates the mark in top portion 203 of the part comprising the top portion and already transformed and manipulated bottom portion 202. Characteristics of the mark may depend on several process factors such as the particular shape and hardness of the probe, the forces applied by the actuator during marking, the feedstock used in the additive step, the feedstock adding process parameters, and all of the transformative steps such as drying temperature settings and measurements, partial pressure solvent concentrations which can be measured preferably by a concentration monitor 250 mounted downstream from outlet port 212, flow temperatures and volumes on the various zones from the various ports, and drying time to name only some. The concentration monitor may be an electrochemical gas sensor, an infrared spectrophotometer, or some other suitable sensor that can measure the concentration of molecules, compounds or components. In a specific embodiment, the concentration monitor measures the concentration of the volatile components of the build material, such as the solvent. Similarly, the concentration monitor can be mounted downstream from the port 222 or 223, when they are used to carry away the solvent laden flow. Alternatively, the concentration monitor may be mounted inside the machine chamber 211, positioned in a way that it can monitor the concentration of molecules or compounds in the top portion of the part 203, at its surface, or in the vapors just above it. The ones with ordinary skills in the art would immediately recognize that the level of dryness of the top portion of the part 203 is inversely proportional to the concentration of solvents in the outlet ports 212, 222, 223, in the top portion of the part 203, in the vapors just above the top portion of the part 203, or combinations thereof.

In an embodiment, camera system 450 is used to measure metrics such as physical dimensions and diffuse reflectance of the mark either as the mark is made or after the mark is made. The camera system may be advantageously placed with angle of inclination 453 and field of view 452 as to optimize sensitivity to the particular metrics, e.g. depth of an indentation or length of a scratch, that are most strongly correlated to parameters of interest such as readiness to move on to the manipulative step. The angle of inclination preferably may be chosen between 5 degrees and 85 degrees and in some embodiments advantageously between 25 degrees and 55 degrees The field of view should take in the entire build surface but advantageously avoid viewing hot areas such as lamps and heaters and their specular and diffuse reflectance. The ones of the ordinary skill in the art would recognize that the physical mark 603 could be advantageously created in an area of the part that would not cause a permanent defect in the final part. Even more advantageously, the physical mark would be created in a separate sacrificial part that is formed at the same time as the "real" part using exactly the same forming process but its solely purpose is to act as a witness part to monitor the completeness of the transformation process. Measurements from the camera system are sent to the controller which then, based on all other process parameter information derived from measurements (e.g. solvent partial pressure, concentration, temperatures) or from the build model, determines whether the transformative step is sufficiently completed, and if not completed may determine additional transformative processing and possibly confirmative tests. The completeness of the transformative process is defined by target values or value ranges assigned to the measurements performed, described herein as known criteria. The controller determines the completeness of the transformative process based on the comparison between one or more measurement results and the known criteria. The measurements of the parameters are taken either continuously or at determined intervals and compared with the known criteria until the controller determines that the transformative step is complete. For example, the temperature of the part and the solvent concentration are measured continuously until they reach a known value or until they stay within a known value range for a known amount of time. In another example, the temperature of the part and the solvent concentration are measured only at discrete intervals, e.g. 10 seconds, 1 minute, 5 minutes, etc. and the transformation process is stopped if the measured value is within a known range. The measurement intervals may be kept constant or adjusted depending on the difference between the measured value and the known criteria value. The measurement used for the comparison may be of the whole part or a weighted measurement of one or more portions. For example, the decision to stop the transformative step may be based on the average temperature of the whole part, the difference between the minimum and maximum temperatures, the absolute variance of temperature measurements (e.g. the standard deviation), the relative difference or variance (i.e., the percentage), or other criteria.

Furthermore, test data taken from previous tests from previous cycles can be stored in a database and incorporated into a model to inform and calibrate subsequent transformative processing, such as with a drying process, the optimal flows and temperatures, build surface and chamber temperatures, drying carriage relative velocity, raster pattern density, frequency, radiative source or sources time, timing and intensity, and the exhaust and purge gases supplied to the machine chamber. The test data taken may also be used to modify both additive steps and manipulative steps, for example, deposition rate during addition or cutting rate during manipulation, in order to further optimize the manufacturing process, the ultimate properties of the part, or both.

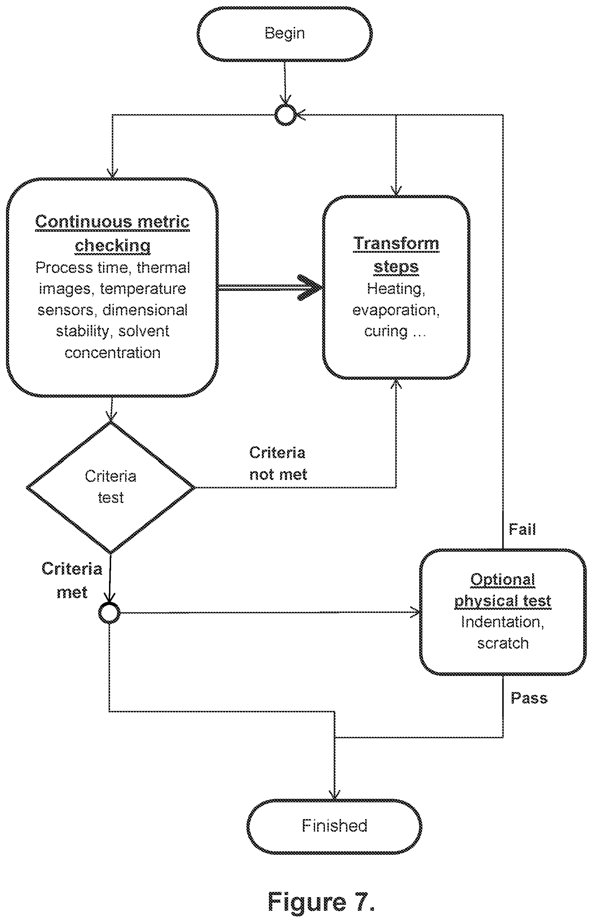

Control and calibration of a drying process may be by digital software computer algorithm which resides and executes on controller 499, said controller comprising a computer system. Alternatively, a digital software algorithm may reside and execute on a remote computer system that is part of a network which the controller 499 is in communication with, and may be directed by, said remote computer system. In one embodiment, the digital software computer algorithm controls the transformation step 102 as depicted in Figure 7. Firstly, both applicable transformation steps such as lamp heating, blowing gases, evacuating the chamber, and removing solvent laden gases are begun concurrently with, or prior to, the acquisition of process parameters such as elapsed process time, set points e.g. flow rates, radiative source settings and continuously monitored process metrics to include but not limited to temperatures and dimensions derived from camera system 450, temperature sensors, and solvent concentrations derived from concentration monitor 250. Acquisition of said process parameters and process metrics may be used to algorithmically adjust, under digital computer control, the process parameters. For example, the radiative heating element intensities may be adjusted to optimize the drying process beyond initially set parameters. Processing continues until a set of recipe-determined, or algorithmically determined criteria are met. The criteria may be based on suitable methodologies including, but not limited to, principal components regression (PCR) and principal components analysis (PCA), k-nearest neighbors, and artificial neural network (ANN) pattern matching. Once criteria have been met, processing may be halted, or optionally, a physical test may be performed as by actuator 600, actuator probe 601, and camera system 450 under control of controller 499. If said physical test passes then the transformation step may be deemed complete, otherwise further processing may be begun.

It will be clear to a practitioner with ordinary skill in the art that many other extensions and configurations in addition to the preferred embodiments are possible and exemplification of these preferred embodiments herein does not preclude these other embodiments for the purposes of this disclosure.

This application is a divisional application of EP21856781.6. The following are the claims of the parent application and not the claims of this divisional application. However, the claims of the parent application form part of the content of this divisional application, and the applicant reserves the right to pursue protection for the subject matter defined by the claims of the parent application in this divisional application or a further divisional application. The claims of this divisional application follow under the heading CLAIMS below.
1. A method of forming a completed physical part, comprising:
   additively manufacturing a part via a first process;
   transforming the part via a second process comprising a transformation process to produce a transformed part;
   manipulating the transformed part via a third process to produce a manipulated part; and
   repeating at least one of the additively manufacturing, transforming, or manipulating steps to form the completed physical part.
2. The method of forming a physical part of claim 1, wherein the first process further comprises deposition, printing, jetting, or a combination thereof.
3. The method of forming a physical part of claim 1, wherein the first process further comprises extrusion, placing, or a combination thereof.
4. The method of forming a physical part of claim 1, wherein the second process further comprises heating a portion of the part.
5. The method of forming a physical part of claim 1, wherein the second process further comprises removing, subliming, evaporating, drying, baking, or a combination thereof.
6. The method of forming a physical part of claim 1, wherein the second process further comprises exposing the part to a vacuum, a heat source, or a combination thereof.
7. The method of forming a physical part of claim 1, wherein the second process further comprises radiative heating, convective heating, partial pressure evaporation, conductive heating, and combinations thereof.
8. The method of forming a physical part of claim 1, wherein the second process further comprises inductive heating.
9. The method of forming a physical part of claim 1, wherein the third process further comprises removing a portion of the transformed part.
10. The method of forming a physical part of claim 1, wherein the third process further comprises milling, cutting, ablating, grinding, or a combination thereof.
11. The method of forming a physical part of claim 1, further comprising forwarding the completed physical part to a secondary operation to form a finished physical part.
12. A finished physical part, formed by the method of claim 1.
13. A method of controlling a transformation process, comprising:
   evaluating a first part to produce a first measurement result;
   comparing the first measurement result to one or more known criteria; and
   adjusting a parameter of the transformation process based on a comparison between the first measurement result and the one or more known criteria.
14. The method of controlling a transformation process of claim 13, wherein the first measurement result comprises several measurements over a period of time.
15. The method of controlling a transformation process of claim 13, wherein evaluating a first part further comprises evaluating one or more discrete portions of the first part.
16. The method of controlling a transformation process of claim 15, wherein the first measurement result is a comparison of one or more measurements taken from the one or more discrete portions of the first part.
17. The method of controlling a transformation process of claim 13, further comprising evaluating a second part to produce a second measurement result.
18. The method of controlling a transformation process of claim 17, wherein evaluating a first part to produce a first measurement result and evaluating a second part to produce a second measurement result are completed at substantially the same time.
19. The method of controlling a transformation process of claim 17, wherein evaluating the second part comprises a different measurement than evaluating the first part.
20. The method of controlling a transformation process of claim 17, wherein evaluating the second part further comprises physically contacting the second part.
21. The method of controlling a transformation process of claim 13, wherein evaluating a first part further comprises measuring a concentration of one or more components of a build material.
22. The method of controlling a transformation process of claim 21, wherein the one or more components of a build material comprise a vapor.
23. The method of controlling a transformation process of claim 21, wherein the one or more components of a build material comprise a solvent.
24. The method of controlling a transformation process of claim 13, wherein evaluating a first part further comprises physically contacting the first part.
25. The method of controlling a transformation process of claim 13, wherein evaluating the part further comprises receiving a signal from a sensing system.
26. The method of controlling a transformation process of claim 25, wherein the sensing system is a camera system capable of operating in the infrared spectrum and in the visible spectrum.
27. The method of controlling a transformation process of claim 25, wherein the sensing system is a discrete sensor.
28. The method of controlling a transformation process of claim 13, wherein the one or more known criteria is based on a geometry of the first part.
29. The method of controlling a transformation process of claim 28, wherein the geometry on the first part is based on a computer assisted design (CAD) model of the first part.
30. The method of controlling a transformation process of claim 25, wherein the one or more known criteria is based on the measurement result from the sensing system.
31. The method of controlling a transformation process of claim 30, wherein the measurement result is one or more discrete temperatures or a temperature map of the first part.
32. The method of controlling a transformation process of claim 13, wherein the one or more known criteria is based on a calibration of the transformation process.
33. The method of controlling a transformation process of claim 13, wherein adjusting a parameter further comprises adjusting a temperature of a part.
34. The method of controlling a transformation process of claim 13, wherein adjusting a parameter further comprises adjusting a radiation source, a gas port, a build surface, or a combination thereof.
35. The method of controlling a transformation process of claim 13, further comprising stopping the transformation process based on a comparison between the measurement result and the one or more known criteria.
36. The method of controlling a transformation process of claim 13, further comprising:
   maintaining a bottom portion of the first part at a first temperature; and
   maintaining a top portion of the first part at a second temperature.
37. The method of controlling a transformation process of claim 36, wherein the first temperature is lower than the second temperature.
38. The method of controlling a transformation process of claim 36, wherein the second temperature is from about 0°C to about 300°C.
39. The method of controlling a transformation process of claim 36, wherein the first temperature is from about 0°C to about 150°C.
40. The method of controlling a transformation process of claim 13, further comprising irradiating a first portion of the first part, exposing a first portion of the first part to a heated gas, or a combination thereof prior to evaluating the first part to produce a first measurement result.
41. A method of forming a completed physical part, comprising:
   additively manufacturing a part via a first process;
   transforming the part via a second process comprising a transformation process to produce a transformed part;
   controlling the transformation process, comprising:
      evaluating a part to produce a measurement result;
      comparing the measurement result to one or more known criteria; and
      adjusting a parameter of the transformation process based on a comparison between the measurement result and the one or more known criteria;
   manipulating the transformed part via a third process to produce a manipulated part; and
   repeating at least one of the additively manufacturing, transforming, or manipulating steps to form the completed physical part.
42. A finished physical part, formed by the method of claim 41.

## Claims

1. A method of controlling a transformation process, comprising:
evaluating a first part to produce a first measurement result;
comparing the first measurement result to one or more known criteria; and
adjusting a parameter of the transformation process based on a comparison between the first measurement result and the one or more known criteria.

2. The method of controlling a transformation process of claim 1, wherein the first measurement result comprises several measurements over a period of time; and/or wherein evaluating a first part further comprises physically contacting the first part.

3. The method of controlling a transformation process of claim 1, wherein evaluating a first part further comprises evaluating one or more discrete portions of the first part; wherein, optionally, the first measurement result is a comparison of one or more measurements taken from the one or more discrete portions of the first part.

4. The method of controlling a transformation process of claim 1, further comprising evaluating a second part to produce a second measurement result.

5. The method of controlling a transformation process of claim 4, wherein evaluating a first part to produce a first measurement result and evaluating a second part to produce a second measurement result are completed at substantially the same time; and/or
wherein evaluating the second part comprises a different measurement than evaluating the first part; and/or
wherein evaluating the second part further comprises physically contacting the second part.

6. The method of controlling a transformation process of claim 1, wherein evaluating a first part further comprises measuring a concentration of one or more components of a build material.

7. The method of controlling a transformation process of claim 6, wherein the one or more components of a build material comprise a vapor; and/or
wherein the one or more components of a build material comprise a solvent.

8. The method of controlling a transformation process of claim 1, wherein evaluating the part further comprises receiving a signal from a sensing system.

9. The method of controlling a transformation process of claim 8, wherein the sensing system is a camera system capable of operating in the infrared spectrum and in the visible spectrum; and/or
wherein the sensing system is a discrete sensor.

10. The method of controlling a transformation process of claim 1, wherein the one or more known criteria is based on a geometry of the first part;
wherein, optionally, the geometry on the first part is based on a computer assisted design (CAD) model of the first part.

11. The method of controlling a transformation process of claim 8, wherein the one or more known criteria is based on the measurement result from the sensing system;
wherein, optionally, the measurement result is one or more discrete temperatures or a temperature map of the first part.

12. The method of controlling a transformation process of claim 1, wherein the one or more known criteria is based on a calibration of the transformation process; and/or
wherein adjusting a parameter further comprises adjusting a temperature of a part; and/or
wherein adjusting a parameter further comprises adjusting a radiation source, a gas port, a build surface, or a combination thereof; and/or
further comprising stopping the transformation process based on a comparison between the measurement result and the one or more known criteria.

13. The method of controlling a transformation process of claim 1, further comprising:
maintaining a bottom portion of the first part at a first temperature; and
maintaining a top portion of the first part at a second temperature.

14. The method of controlling a transformation process of claim 13, wherein the first temperature is lower than the second temperature; and/or
wherein the second temperature is from about 0°C to about 300°C; and/or
wherein the first temperature is from about 0°C to about 150°C.

15. The method of controlling a transformation process of claim 1, further comprising irradiating a first portion of the first part, exposing a first portion of the first part to a heated gas, or a combination thereof prior to evaluating the first part to produce a first measurement result.
